# EUROPÄISCHE PATENTSCHRIFT

(11) **EP 2 688 124 B1**
(45) Veröffentlichungstag und Bekanntmachung des Hinweises auf die Patenterteilung: **09.08.2017**
(21) Anmeldenummer: 13171585.6
(22) Anmeldetag: 12.06.2013
(51) Int. Cl.: H01M 2/36, H01M 2/06, H01M 10/0525, H01M 10/42

(54) **VERFAHREN ZUM BEFÜLLEN EINER BATTERIE UND NACH DEM VERFAHREN KONDITIONIERTE BATTERIE**
METHOD FOR FILLING A BATTERY AND BATTERY CONDITIONED ACCORDING TO THE METHOD
PROCÉDÉ DE REMPLISSAGE D'UNE BATTERIE ET BATTERIE CONDITIONNÉE SELON LE PROCÉDÉ

(30) Priorität: 16.07.2012 DE 102012212384
(43) Veröffentlichungstag der Anmeldung: 22.01.2014
(73) Patentinhaber: Robert Bosch GmbH, 70442 Stuttgart (DE)
(72) Erfinder: Sebastian, Georg, 71672 Marbach A.N. (DE); Ogihara, Hideki, 70839 Gerlingen (DE); Zielke, Christian, 71229 Leonberg (DE); Metzdorf, Karina, 71679 Asperg (DE); Fischer, Peter, 70839 Gerlingen (DE)

(56) Entgegenhaltungen:
- DE-A1-102007 063 176
- FR-A1- 2 942 079
- US-A1- 2002 006 540

## Beschreibung

Die vorliegende Erfindung betrifft ein Verfahren zum Befüllen einer Batterie und eine nach dem Verfahren konditionierte Batterie, insbesondere einen Lithium-Ionen-Akku zur Verwendung im Automobilbereich.

### Stand der Technik

Aus dem Stand der Technik sind Lithium-Ionen-Akkumulatoren (im Folgenden kurz Lilon-Akkus) bekannt, welche insbesondere im Automotive-Bereich Verwendung finden.

Bei der Herstellung solcher Lilon-Akkus müssen diese mit einem flüssigen Elektrolyten befüllt werden, welches das als bekannt vorausgesetzte Wirkungsprinzip als Energielieferant dieser Lilon-Akkus erst ermöglicht.

Herkömmlicherweise wird der Elektrolyt durch ein eigens für den Befüllvorgang angeordnetes Durchgangsloch in einer Verschlussplatte in das Gehäuse des Akkus eingefüllt, wobei die Verschlussplatte praktisch als Deckel Teil des Gehäuses ist. Das Befüllungs-Loch wird nach Abschluß des Befüllvorgangs durch Verschweißen (zum Beispiel durch Laserschweißen) mit einem entsprechend passenden Verschlußstück verschlossen. Jedoch bildet die Schweißnaht um das Verschlußstück herum eine Schwachstelle für ein Austreten von Elektrolytflüssigkeit, wenn die Schweißnaht fehlerhaft ausgeführt ist und durch einen Druckanstieg im Akku-Gehäuse, durch Temperaturanstieg verursacht durch erhöhte Umgebungstemperaturen und/oder Temperaturerhöhung innerhalb des Akkugehäuses, diese aufbrechen kann. Für einen solchen Fall ist in der Regel außerdem in der Verschlussplatte ein Sicherheitsventil angeordnet.

Das Befüllen selber kann derart erfolgen, dass zunächst ein Unterdruck im Akkugehäuse erzeugt wird, so dass die Elektrolytflüssigkeit relativ leicht in das Gehäuse gefüllt bzw. gesogen wird. Jedoch erfordert dies einen relativ hohen maschinellen Aufwand. Außerdem stellt die Anordnung des Befüllungsloches, des Sicherheitsventils und nicht zuletzt der Anschlußpole in der Verschlussplatte eine unerwünschte bauliche Einschränkung dar. Aus der DE 10 2009 057 155 A1 ist beispielsweise eine Füllvorrichtung zum Befüllen eines Lithium-Ionen-Akkus mit einer Elektrolytflüssigkeit bekannt, wobei die Elektrolytflüssigkeit durch eine Kombination eines Hüllrohrs und einem darin angeordneten Füllrohr durch die Verschlussplatte in das Akkugehäuse eingefüllt wird. Das Hüllrohr, welches das mit dem Elektrolyten durchströmte Füllrohr umgibt, bildet eine Sicherheitsbarriere für die Umgebung und soll eine mögliche Kontamination des Akkugehäuses mit dem Elektrolyten, beispielsweise durch austretenden Elektrolytdampf, verhindern. FR2942079, DE102007063176 und US2002/006540 beschreiben andere Füllvorrichtungen zum Befüllen von Batterien.

### Offenbarung der Erfindung

Die Erfindung schlägt unter einem ersten Aspekt gemäß Anspruch 1 ein Verfahren zum Befüllen einer Batterie mit einem Batteriefluid vor. Unter einem zweiten Aspekt gemäß Anspruch 10 schlägt die Erfindung eine Batterie vor, welche nach dem Verfahren gemäß dem ersten Aspekt konditioniert ist, wobei die Batterie ein Lithium-Ionen-Akkumulator zur Verwendung in einem automobilen Fahrzeug ist.

### Vorteile der Erfindung

Der Vorteil des vorgeschlagenen Verfahrens ergibt sich daraus, dass auf der Verschlussplatte des Batteriegehäuses der Platz zumindest für die Befüllungsöffnung eingespart werden kann, und sich somit vorteilhaftere Möglichkeiten der Formgebung der Batterie bzw. des Akkus ergeben. Außerdem kann ein Befüllen mit einem Elektrolyten auch in zeitsparender Weise mit höherem Durchfluss durchgeführt werden. Es kann weiterhin ein Lecktest mittels der Durchgangsbohrungen durchgeführt werden, um Rückschlüsse auf mögliche unerwünschte Kontaminationen, die sich beim Herstellungsprozess ergeben könnten, zu ziehen.

Vorzugsweise umfasst der Schritt des Verschließens der Durchgangsbohrungen ein Verschließen mittels einer Kugelverstemmung, was einfach und sicher durchführbar ist. Weiterhin wird bevorzugt, dass der Schritt des Verschließens ein Verschließen mittels einer Verschlusskappe umfasst. Dies ist eine noch einfachere Weise, die Durchgangsbohrungen zu verschliessen, wobei die Verschlusskappe bzw. -kappen wieder lösbar sein kann bzw. sein können. Weitere Möglichkeiten des Verschliessens, beispielsweise durch Anschweißen eines Deckels, Stopfens usw, odeer ein Vernieten sind denkbar.

Außerdem wird bevorzugt, dass während des Schritts des Befüllens mit dem Batteriefluid durch die Durchgangsbohrung der einen Anschlußeinrichtung ein Evakuieren des Batterieinnenraums durch die Durchgangsbohrung der anderen Anschlußeinrichtung durchgeführt wird, um das Befüllen zu unterstützen. Dies hat den Vorteil einer Zeitersparnis bei höherer Durchlussrate. Außerdem weist mindestens eine der Anschlußeinrichtungen jeweils zwei Durchgangsbohrungen auf, wobei der Schritt des Befüllens mit dem Fluid durch die eine Durchgangsbohrung einer Anschlußeinrichtung durchgeführt wird, und der Schritt des Evakuierens durch die andere Durchgangsbohrung einer Anschlußeinrichtung durchgeführt wird. Hierbei kann nochmals eine Zeitersparnis bei noch höherer Durchflussrate des Elektrolyten erreicht werden, wobei das Befüllen und Evakuieren natürlich auch jeweils an beiden Anschlußeinrichtungen durchführbar ist, sofern beide Anschlusseinrichtungen die beanspruchten beiden Durchgangsbohrungen aufweisen.

Außerdem wird noch bevorzugt, dass mittels der Durchgangsbohrungen der Anschlußeinrichtungen ein Lecktest hinsichtlich der Dichtheit des Batteriegehäuses durchgeführt wird, was für die gewünschte Funktion der Batterie bzw. des Akkus wichtig ist. Dabei kann der Lecktest direkt in der gleichen Station ausgeführt werden, in welcher auch die Elektrolytbefüllung stattfindet.

### Kurze Beschreibung der Zeichnungen

Nachfolgend wird die Erfindung anhand von Ausführungsformen in Verbindung mit den Figuren erläutert, wobei:
- Figur 1: eine schematischen Querschnittsansicht einer herkömmlichen Batterie bzw. eines Lithium-Ionen-Akkus mit zwei elektrischen Anschlußeinrichtungen zeigt;
- Figur 2: eine schematische Querschnittsansicht einer elektrischen Anschlußeinrichtung
- Figur 3: eine schematische Querschnittsansicht einer elektrischen Anschlußeinrichtung; und
- Figur 4: eine schematische Querschnittsansicht einer elektrischen Anschlußeinrichtung gemäß einer Ausführungsform der Erfindung im Detail zeigt.

### Ausführungsformen der Erfindung

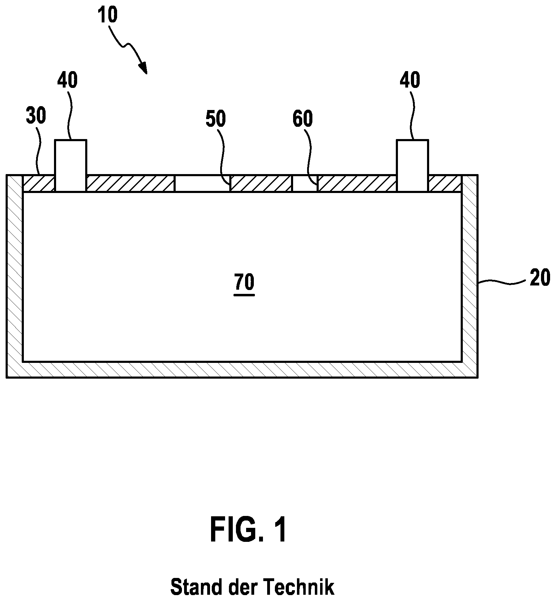

Figur 1 zeigt einen schematischen Aufbau einer herkömmlichen Batterie 10 im Querschnitt, wie z.B. einen Lithium-Ionen-Akku.

Die Batterie 10 weist ein Gehäuse 20 mit einer das Gehäuse 20 verschliessenden Verschlussplatte 30 auf. Die Form des Gehäuses 20 muss hierbei nicht rechteckig sein, sondern kann den Einbauanforderungen entsprechend ausgestaltet sein. Die Verschlussplatte 30 umfasst im Wesentlichen elektrische Anschlusspole 40, 40 (oder im Folgenden auch Anschlusseinrichtungen bezeichnet), eine Durchgangsöffnung 50 für das Anbringen eines Sicherheitsventils (hier nicht dargestellt) bei einem Überdruck im Gehäuseinneren 70, und eine Durchgangsöffnung 60 zum Befüllen des Gehäuseinneren 70 mit einer Elektrolytflüssigkeit. Die Durchgangsöffnungen 50, 60 sind in Figur 1 zur besseren Darstellung nicht verschlossen.

Im Gehäuseinneren 70 befinden sich hier nicht dargestellte Elektrodenbaugruppen, in der Regel entweder ein oder mehrere Wickel aus einer Anoden-, Separator-, Kathoden- und noch einer weiteren Separatorschicht, oder ein Stapel aus (gegebenenfalls mehreren) Lagen Anoden, Separatoren und Kathoden, wie es im Stand der Technik bekannt ist. Zum Entnehmen der Energie bzw. des Stromes von den Elektrodenbaugruppen sind diese mit den Polen 40, 40 elektrisch verbunden, welche die elektrische Schnittstelle nach außen bilden.

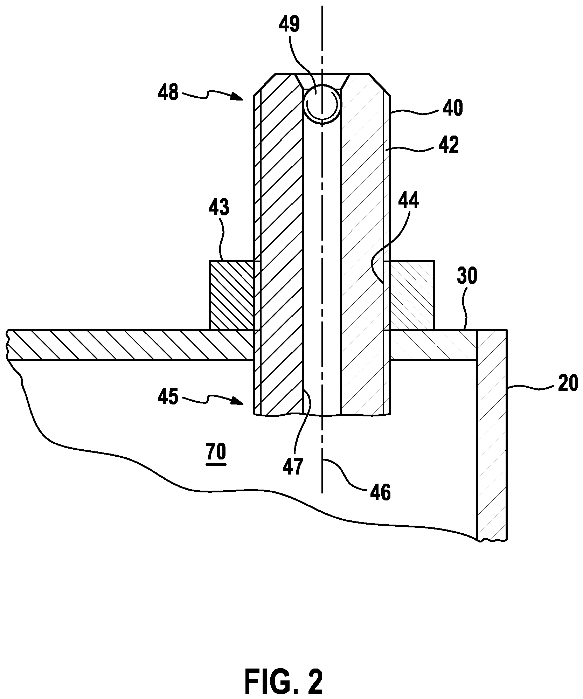

Figur 2 dargestellt eine Querschnittsansicht einer Detailansicht einer Anschlusseinrichtung 40 und Teile der Verschlussplatte 30 und des Gehäuses 20 sowie eines Teils des Gehäuseinneren 70.

Die Anschlusseinrichtung 40 weist ein Außengewinde 42 auf, so dass die Anschlusseinrichtung 40 zum einen mittels einer Mutter 43 mit entsprechendem Innengewinde 44 gegenüber der Verschlussplatte 30 fixierbar ist, und zum anderen an ihrem in das Gehäuseinnere 70 ragenden Ende 45 mit einer hier nicht dargestellten Elektrodenbaugruppe koppelbar ist. Nicht im Detail dargestellt sind hierbei Dichtelemente zwischen Anschlusseinrichtung und Verschlussplatte.

Weiterhin weist die Anschlusseinrichtung 40 entlang ihrer Längsachse 46 eine Durchgangsbohrung 47 auf, und zwar zum Befüllen des Gehäuseinneren mit einer Elektrolytflüssigkeit. Somit entfällt in praktischer Weise, da es Platz auf der Verschlussplatte 30 einspart, die Anordnung einer entsprechenden Durchgangsöffnung in der Verschlussplatte 30, wie es sonst im Stand der Technik gemäß Figur 1 üblich ist.

Nach dem Befüllvorgang wird die Durchgangsbohrung 47 an ihrem Ende 48 mittels Kugelverstemmung verschlossen, d.h. eine entsprechend dimensionierte Kugel 49 mit leichtem Übermaß gegenüber dem Innendurchmesser der Durchgangsbohrung 47 wird dort eingepresst.

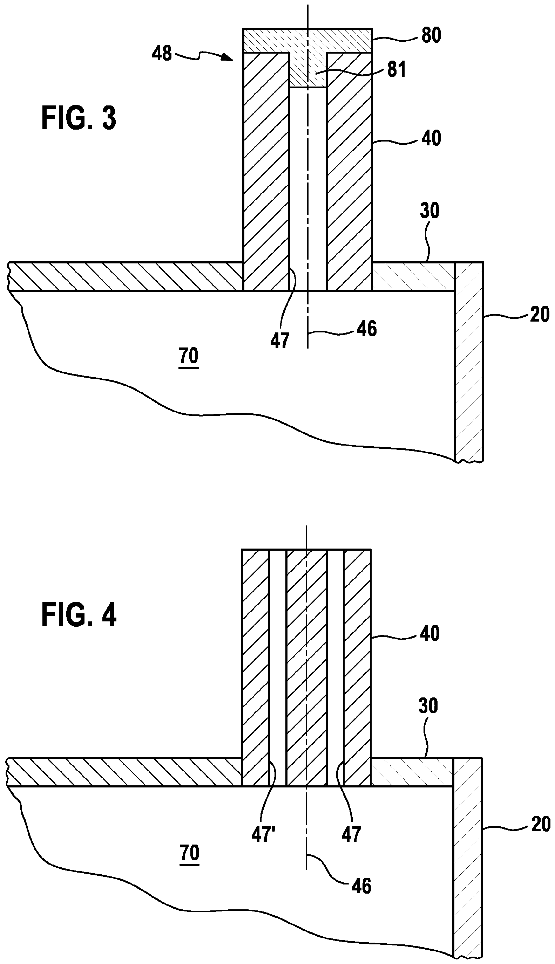

In Figur 3 ist eine Anschlusseinrichtung 40 dargestellt, und zwar ebenfalls in einer detaillierten Querschnittsansicht wie in Figur 2.

Gleiche Bezugszeichen sollen, wie auch in der übrigen Beschreibung, gleiche Elemente bedeuten.

Im Unterschied zur Figur 2 ist die in Figur 3 dargestellte Anschlusseinrichtung 40, bzw. die entlang ihrer Längsachse 46 verlaufende Durchgangsbohrung 47, in abdichtender Weise mit einer Verschlusskappe 80 verschlossen, die teilweise mit einem entsprechend dimensionierten Vorsprung 81 in die Durchgangsbohrung 47 hineinragt. Die Verschlusskappe 80 kann aus einem beliebigen geeigneten Material hergestellt sein, wie zum Beispiel einem Metal oder auch einem Kunststoff. Es ist auch denkbar, dass der Vorsprung 81 mit einem (hier nicht dargestellten) Außengewinde versehen ist, welches passend zu einem (hier ebenfalls nicht dargestellten) Innengewinde in der Durchgangsbohrung 47 ist.
Wie bereits mit Bezug auf Figur 2 erwähnt, findet ein Befüllungsvorgang des Gehäuseinneren 70 mit einem Elektrolyten durch die Durchgangsbohrung 47 hindurch statt, bevor die Durchgangsbohrung 47 mit der Verschlusskappe 80 verschlossen wird. An dieser Stelle soll darauf hingewiesen werden, dass natürlich auch weitere Möglichkeiten des Verschliessens denkabr sind, wie zum Beispiel durch Schweißen, Nieten usw.

Figur 4 zeigt nun eine Ausführungsform einer Anschlusseinrichtung 40 gemäß der Erfindung, und zwar ebenfalls in einer detaillierten Querschnittsansicht wie in Figur 2.
Hierbei weist die Anschlusseinrichtung 40, im Gegensatz zu den in den Figuren 2 und 3 dargestellten Anschlusseinrichtungen, zwei Durchgangsbohrungen 47, 47' auf, welche entlang der Längsachse 46 der Anschlusseinrichtung 40 beabstandet voneinander verlaufen.
Die Durchgangsbohrungen 47, 47' können für einen Lecktest, z.B. mit Helium-Gas, für das Gehäuseinnere 70 verwendet werden, um die Funktion des Sicherheitsventils in der Verschlussplatte so zusagen "on-line", d.h. während der Herstellung, zu testen.
Weiterhin könnten die beiden Durchgangsbohrungen 47, 47' jeweils als ein Befüll- bzw. Absaugloch für das Befüllen mit dem Elektrolyten benutzt werden, um den Befüllvorgang zu beschleunigen. Außerdem könnte hierbei ein geschlossenes System verwendet werden, so dass keine Elektrolytdämpfe in die Umgebung austreten können und eine Reinigung der Elektrolyt-Befüllungsöffnung vermieden wird. Dies ist insofern wichtig, da saubere Oberflächen an den Befüllungsöffnungen notwendig sind, um ein dichtes Verschliessen zu gewährleisten.

Die Durchgangsbohrungen 47, 47' werden dann, wie es mit Bezug auf die Figuren 2 und 3 erläutert ist, entsprechend verschlossen, was hier aber nicht dargestellt ist.

Es ist im Übrigen auch denkbar, eine der Durchgangsbohrungen in der Art eines Sicherheitsventils entsprechend zu verschliessen, was eine Anordnung eines Sicherheitsventils auf der Verschlussplatte 30 einsparen könnte.

Abschließend sei noch bemerkt, dass die in den Figuren 1 bis 4 dargestellten Dimensionen nicht maßstabsgetreu sind, und die Innendurchmesser der Durchgangsbohrungen 47 bzw. 47' in geeigneter Weise gewählt werden können.

## Patentansprüche

1. Verfahren zum Befüllen einer Batterie mit einem Batteriefluid, wobei die Batterie ein Batteriegehäuse (20) umfasst, durch welches sich wenigstens zwei elektrische Anschlußeinrichtungen (40, 40) mit jeweils einer Durchgangsbohrung (47) erstrecken, welche eine Fluidverbindung eines Batterieinnenraums (70) mit einer Batterieumgebung herstellen, wobei eine oder alle Anschlußeinrichtungen (40) zwei Durchgangsbohrungen (47, 47') aufweisen, wobei das Verfahren die folgenden Schritte umfasst:
- Befüllen mit dem Batteriefluid durch die wenigstens eine Durchgangsbohrung (47) wenigstens einer der Anschlußeinrichtungen (40); und
- nach Abschluß des Befüllens Verschließen der Durchgangsbohrungen (47) in einer abdichtenden Weise.

2. Verfahren nach Anspruch 1, wobei das Batteriefluid eine für eine Batterie geeignete Elektrolytflüssigkeit umfasst.

3. Verfahren nach Anspruch 1 oder 2, wobei der Schritt des Verschließens ein Verschließen mittels einer Kugelverstemmung umfasst.

4. Verfahren nach Anspruch 1 oder 2, wobei der Schritt des Verschließens ein Verschließen mittels einer Verschlusskappe (80), ein Anschweißen eines Deckels oder eines Stopfens, oder ein Vernietenumfasst.

5. Verfahren nach einem der vorangehenden Ansprüche, wobei unmittelbar vor dem Schritt des Befüllens mit dem Batteriefluids durch die Durchgangsbohrung (47) der einen Anschlußeinrichtung (40) ein Evakuieren des Batterieinnenraums (70) durch die Durchgangsbohrung (47) der anderen Anschlußeinrichtung (40) durchgeführt wird, um das Befüllen zu unterstützen.

6. Verfahren nach einem der vorangehenden Ansprüche, wobei der Schritt des Befüllens mit dem Fluid durch die eine Durchgangsbohrung (47) einer Anschlußeinrichtung (40) durchgeführt wird, und der Schritt des Evakuierens durch die andere Durchgangsbohrung (47') einer Anschlußeinrichtung (40) durchgeführt wird.

7. Verfahren nach Anspruch 5 oder 6, wobei das Befüllen und Evakuieren jeweils an beiden Anschlußeinrichtungen (40, 40) durchgeführt wird.

8. Verfahren nach einem der vorangehenden Ansprüche, wobei mittels der Durchgangsbohrungen (47, 47') der Anschlußeinrichtungen (40) ein Lecktest hinsichtlich der Dichtheit des Batteriegehäuses (20) durchgeführt wird.

9. Batterie, welche nach dem Verfahren einer der Ansprüche 1 bis 8 konditioniert ist, wobei die Batterie ein Lithium-Ionen-Akkumulator zur Verwendung in einem automobilen Fahrzeug ist.

## Claims

1. Method for filling a battery with a battery fluid, wherein the battery comprises a battery housing (20) through which at least two electrical connection devices (40, 40), each with a passage bore (47), extend, the said passage bores establishing a fluid connection between a battery interior (70) and an area surrounding the battery, wherein one or all of the connection devices (40) have two passage bores (47, 47'), wherein the method comprises the following steps:
- filling with the battery fluid through the at least one passage bore (47) of at least one of the connection devices (40); and
- after filling is complete, closing the passage bores (47) in a sealed-off manner.

2. Method according to Claim 1, wherein the battery fluid comprises an electrolyte liquid which is suitable for a battery.

3. Method according to Claim 1 or 2, wherein the closing step comprises closing by means of a staked ball feature.

4. Method according to Claim 1 or 2, wherein the closing step comprises closing by means of a closure cap (80), welding on a cover or a stopper, or riveting.

5. Method according to one of the preceding claims, wherein, immediately before the step of filling with the battery fluid through the passage bore (47) of the one connection device (40), evacuation of the battery interior (70) through the passage bore (47) of the other connection device (40) is carried out in order to assist the filling operation.

6. Method according to one of the preceding claims, wherein the step of filling with the fluid is carried out through the one passage bore (47) of a connection device (40), and the evacuation step is carried out through the other passage bore (47') of a connection device (40).

7. Method according to Claim 5 or 6, wherein the filling and evacuation are each carried out at different connection devices (40, 40).

8. Method according to one of the preceding claims, wherein a leakage test in respect of the leaktightness of the battery housing (20) is carried out by means of the passage bores (47, 47') of the connection devices (40).

9. Battery, which is conditioned according to the method of one of Claims 1 to 8, wherein the battery is a rechargeable lithium-ion battery for use in an automotive vehicle.

## Revendications

1. Procédé pour remplir une batterie avec un fluide pour batterie, la batterie comprenant un boîtier de batterie (20) à travers lequel s'étendent au moins deux dispositifs de raccordement (40, 40) électriques comportant respectivement un trou traversant (47), lesquelles établissent une liaison fluidique d'un espace intérieur de batterie (70) avec un environnement de batterie, un ou tous les dispositifs de raccordement (40) possédant deux trous traversants (47, 47'), le procédé comprenant les étapes suivantes :
- remplissage avec le fluide pour batterie à travers l'au moins un trou traversant (47) d'au moins l'un des dispositifs de raccordement (40) ; et
- après avoir terminé le remplissage, fermeture des trous traversants (47) de manière étanche.

2. Procédé selon la revendication 1, le fluide pour batterie comprenant un liquide électrolyte adapté pour une batterie.

3. Procédé selon la revendication 1 ou 2, l'étape de fermeture comprenant une fermeture au moyen d'un matage à la bille.

4. Procédé selon la revendication 1 ou 2, l'étape de fermeture comprenant une fermeture au moyen d'un capuchon de fermeture (80), un soudage d'un couvercle ou d'un bouchon, ou un rivetage.

5. Procédé selon l'une des revendications précédentes, l'étape de remplissage avec le fluide pour batterie à travers le trou traversant (47) de l'un des dispositifs de raccordement (40) étant directement précédée d'une mise sous vide de l'espace intérieur de batterie (70) à travers le trou traversant (47) de l'autre dispositif de raccordement (40) afin d'assister le remplissage.

6. Procédé selon l'une des revendications précédentes, l'étape de remplissage avec le fluide étant exécutée à travers l'un des trous traversants (47) d'un dispositif de raccordement (40), et l'étape de mise sous vide étant exécutée à travers l'autre trou traversant (47') d'un dispositif de raccordement (40).

7. Procédé selon la revendication 5 ou 6, le remplissage et la mise sous vide étant respectivement réalisés au niveau des deux dispositifs de raccordement (40, 40).

8. Procédé selon l'une des revendications précédentes, un test de fuite concernant l'étanchéité du boîtier de batterie (20) étant effectué au moyen des trous traversants (47, 47') des dispositifs de raccordement (40).

9. Batterie, laquelle est conditionnée conformément au procédé selon l'une des revendications 1 à 8, la batterie étant un accumulateur aux ions de lithium destiné à être utilisée dans un véhicule automobile.
